Europäisches Patentamt

European Patent Office

Office européen des brevets

(11) Veröffentlichungsnummer: **0 450 144 A1**

(12) **EUROPÄISCHE PATENTANMELDUNG**

(21) Anmeldenummer: 90116855.9

(22) Anmeldetag: 03.09.90

(51) Int. Cl.5: **A62B 17/00**, A62B 17/04

(30) Priorität: 06.04.90 DE 4011222

(43) Veröffentlichungstag der Anmeldung:
09.10.91 Patentblatt 91/41

(84) Benannte Vertragsstaaten:
**DE FR GB**

(71) Anmelder: **Drägerwerk Aktiengesellschaft**
**Moislinger Allee 53-55**
**W-2400 Lübeck 1(DE)**

(72) Erfinder: **Marquardt, Wolfgang**
**Hermannstrasse 11a**
**W-2406 Stockelsdorf(DE)**
Erfinder: **Röhling, Holmer**
**Bischofsteicher Weg 28**
**W-2067 Reinfeld(DE)**
Erfinder: **Greiff, Rudolf**
**Heckkaten 32**
**W-2401 Badendorf(DE)**

(54) **Atemschutzgerät mit einer Schutzhülle aus einem beschichteten Gewebe.**

(57) Ein Atemschutzgerät mit einer Schutzhülle, insbesondere einer Rauchschutzhaube, dessen Atemanschluß mit einem den Wasserdampf und das $CO_2$ aufnehmenden sowie sauerstoffabgebenden Chemikal verbunden ist und dessen Hüllen- bzw. Haubenmaterial aus einem beschichteten Verbundwerkstoff mit einem Trägergewebe aus reißfesten, hitzebeständigen und wasserdampfabweisenden Fasern besteht, soll derart verbessert werden, daß das Material für die Schutzhülle und die atemgasführenden Bauteile sowohl eine geringstmögliche Wasserdampfspeicherung bzw. -abgabe aufweist, und bei seiner Elastizität und Geschmeidigkeit bruch- und reißfest ist und sich leicht verarbeiten läßt. Zur Lösung der Aufgabe ist vorgesehen, daß der Verbundwerkstoff ein Trägergewebe (1) aus Glasfasern (2) besitzt, welches eine Zwischenschicht (5) aus Silan als Haftvermittler aufweist, auf welche einseitig zur Umgebung hin eine PVC-Beschichtung (3), und auf der der PVC-Beschichtung (3) abgewandten Fläche eine Silikon-Beschichtung (4) aufgetragen ist.

Fig. 1

Die Erfindung betrifft ein Atemschutzgerät mit einer Schutzhülle, insbesondere einer Rauchschutzhaube, dessen Atemanschluß mit einem den Wasserdampf und das $CO_2$ aufnehmenden sowie sauerstoffabgebenden Chemikal oder mit einem Filter verbunden ist und dessen Hüllen- bzw. Haubenmaterial aus einem beschichteten Verbundwerkstoff mit einem Trägergewebe aus reißfesten, hitzebeständigen und wasserdampfabweisenden Fasern besteht.

Derartige Atemschutzgeräte mit beispielsweise einer Rauchschutzhaube als Schutzhülle werden zur Verwendung in nicht atembaren Atmosphären eingesetzt und sollen auch dazu dienen, den Träger vor schädlichen Hitzeeinwirkungen zu schützen. Das Atemschutzgerät selbst ist an geeigneter Stelle, beispielsweise vor der Brust oder im Nackenbereich des Geräteträgers angebracht, und besitzt eine Strömungsverbindung in das Innere des Haubenraumes. Beim Anlegen des Atemschutzgerätes und nach Überziehen der Haube reagiert die sauerstoffabgebende Chemikalie und gibt ihren Sauerstoff ab.

Das Haubenmaterial selbst besteht aus einem Gewebe aus reißfestem, hitzebeständigem und wasserdampfabweisendem Material, wie es z.B. Glasfasern sind. Dieses ist mit Polytetrafluorethylen (PTFE) beschichtet. Das Haubenmaterial ist somit feuerbeständig, leicht und anschmiegsam, so daß die Haube den Geräteträger möglichst wenig in seiner Bewegungsfreiheit behindert.

Nachteilig bei bekannten Haubenstoffen ist, daß die spröden Glasfasern zu leicht brechen und die gebrochenen Fasern einer nachfolgenden Reißbeanspruchung nicht standhalten, so daß unerwünscht Undichtheiten oder gar Löcher entstehen, die einen wirkungsvollen Atemschutz zunichte machen. Außerdem ist ein derartiger Haubenstoff nicht gegen Durchdringung spitzer Gegenstände fest genug. Die Verarbeitung des bekannten Haubenmaterials ist aufwendig, da besondere Vorkehrungen für die Festigkeit der entstehenden Nahtstellen am Haubenzuschnitt vorgesehen werden müssen; eine Klebung ist wegen der geringen Haftfähigkeit auf PTFE nicht beständig und Nähte reißen wegen der Sprödigkeit des Gewebes häufig ein.

Aus der DD-PS 213 597 ist ein Schutzbekleidungsstoff bekannt geworden, dessen Trägergewebe aus Glasfasern besteht, welches zumindest einseitig mit einer Beschichtung aus Silikon versehen ist. Silikonbeschichtungen haben den Nachteil, daß sie wegen ihrer Geschmeidigkeit und Dehnbarkeit schlecht für eine Verarbeitung von Stoffbahnen zu Kleidungsstücken geeignet sind. Auch Klebungen sind wegen der ungenügenden Kleberhaftung nur mit erheblichen Vorbereitungsmaßnahmen verwirklichbar.

Ein flexibler Schutzstoff ist in der DE-AS 1 074 979 beschrieben, dessen Glasfasergewebe beidseitig mit einer Kunststoffschicht belegt ist, von denen eine aus einer Polyvinylchlorid-Beschichtung besteht. Wenn auch derartige Beschichtungen bezüglich ihrer Dichtheit gegen äußere Schadstoffe und ihrer Verarbeitbarkeit gewisse Eignungen aufweisen, so lassen sie dennoch gegenüber einem geschmeidigen Tragekomfort noch Wünsche offen.

Atemschutzgeräte mit einem chemikal als Sauerstoffquelle, welches Kohlensäure und Wasserdampf aufnimmt und zur Bildung des Sauerstoffs einsetzt (z.B. $KO_2$) sind feuchtempfindlich, so daß derartige Atemschutzgeräte wasserdampfdicht und trocken verpackt werden müssen, damit während der Lagerzeit des Atemschutzgerätes in die Verpackung diffundierender oder von den Bauteilen freiwerdender Wasserdampf nicht zu einem vorzeitigen Aktivieren der Chemikalie und unerwünschter Freigabe von Sauerstoff führt. Eine versiegelte Verpackung ist jedoch aufwendig, und die Trocknung der verschiedenen Bauteile, die mit der Chemikalie in Strömungsverbindung stehen, erfordert einen zusätzlichen Trocknungsarbeitsgang. Wird umfangreiches Hüllenmaterial, wie z.B. eine Kopfhaube, mitverpackt, kann trotz nach außen hin wasserdampfdichter Verpackung dennoch der vom Hüllenmaterial gespeicherte Wasserdampf in das Innere und an das Chemikal abgegeben werden. Um dies zu verhindern, müßte auch noch die Chemikalpatrone versiegelt werden. Derartige Geräte sind in der DE-AS 11 95 602 beschrieben.

Der vorliegenden Erfindung liegt somit die Aufgabe zugrunde, ein Atemschutzgerät der genannten Art so zu verbessern, daß das Material, welches mit dem Chemikal in Strömungsverbindung steht, sowohl eine geringstmögliche Wasserdampfspeicherung bzw. -abgabe aufweist, und die Schutzhülle dabei trotz ihrer Elastizität und Geschmeidigkeit bruch- und reißfest ist, sich leicht verarbeiten läßt, und daß die Schichten gut aneinander und an dem Trägergewebe haften.

Die Lösung der Aufgabe erfolgt dadurch, daß der Verbundwerkstoff ein Trägergewebe aus Glasfasern besitzt, welches eine Zwischenschicht aus Silan als Haftvermittler aufweist, auf welche einseitig zur Umgebung hin eine PVC-Beschichtung, und auf der der PVC-Beschichtung abgewandten Fläche eine Silikon-Beschichtung aufgetragen ist.

Der Vorteil der Erfindung liegt im wesentlichen darin, daß das an sich spröde Glasfasergewebe durch die Silikonbeschichtung sowohl geschmeidig wird als auch einer Knickbelastung standhält, welche nicht zum Einreißen des Gewebes führt. Das silikonbeschichtete Glasfasergewebe zeichnet sich durch fehlende Wasserdampfabsorption und -speicherung aus, wodurch eine spätere unerwünschte Wasserdampfabgabe von vornherein unterbunden wird. Die äußere, zur Umgebung hin gerichtete PVC-Beschichtung sorgt für einen weitestgehend gasundurchlässigen Abschluß nach außen hin und erleichtert die Verarbeitbarkeit des Gewebematerials zu einer Schutzhülle, insbesondere zu einer Schutzhaube. Eine umfassendere Verarbeitung des Gewebestoffes zu einem vollständigen Schutzanzug, welcher den ganzen Körper des Geräteträgers umschließt, ist mit den erfindungsgemäßen Merkmalen ebenfalls leichter verwirklichbar.

Die Zwischenschicht aus Silan sorgt für eine feste Haftverbindung zwischen der Silikonschicht und der PVC-Schicht, die sich sonst voneinander abschälen würden, da sie jetzt jeweils an der gut haftenden Zwischenschicht aus Silan kleben.

Durch den fehlenden Wasserdampfgehalt und die geringe Wasserdampfaufnahme des beschichteten Gewebes ist eine Versiegelung des das Chemikal enthaltenden Atemschutzgerätes zu den atemgasführenden Leitungen hin überflüssig, so daß eine Ingebrauchnahme des Gerätes ohne zeitraubendes Aufbrechen einer Versiegelung erfolgen kann. Darüber hinaus kann das gesamte Hüllenmaterial ohne besonderen zusätzlichen Trocknungsvorgang in die Verpackung eines Atemschutzgerätes aufgenommen werden, wobei nicht befürchtet zu werden braucht, daß eine übermäßige Wasserdampfabgabe zu einer frühzeitigen Sauerstoffentwicklung aus dem Chemikal führen könnte.

Auf besonders einfache weise läßt sich die Zwischenschicht durch Imprägnierung des Glasfasergewebes mit Silan erreichen. Auf die so gewonnene Zwischenschicht können die Silikon- und die PVC-Schicht ohne weitere Vorbehandlung aufgetragen werden.

Eine weitere günstige Möglichkeit für die Verwirklichung einer Zwischenschicht besteht darin, daß auf das Glasfasergewebe ein Belag aus Silan aufgetragen ist, der einseitig oder auch beidseitig des Gewebes als Haftvermittler für die anschließend aufzubringende PVC- und Silikonschicht dient.

Für die Imprägnierung wie für die Beläge kommen Silane in Lösungen oder Dispersionen Frage. Hierunter fallen beispielsweise die organofunktionellen Silane mit der Struktur von Organodi- oder -trialkoxyverbindungen, deren funktionelle Gruppen die Vinyl-, Methanyl-, Amiro-, Mercaptogruppen u.a. sein können.

Ein Ausführungsbeispiel der Erfindung wird anhand der Zeichnung dargestellt und im folgenden näher erläutert. Es zeigen

Fig. 1    den Schnitt durch ein Teilstück des Verbundwerkstoffes,

Fig. 2    die Darstellung einer Schutzhülle mit zugehörigem Atemschutzgerät.

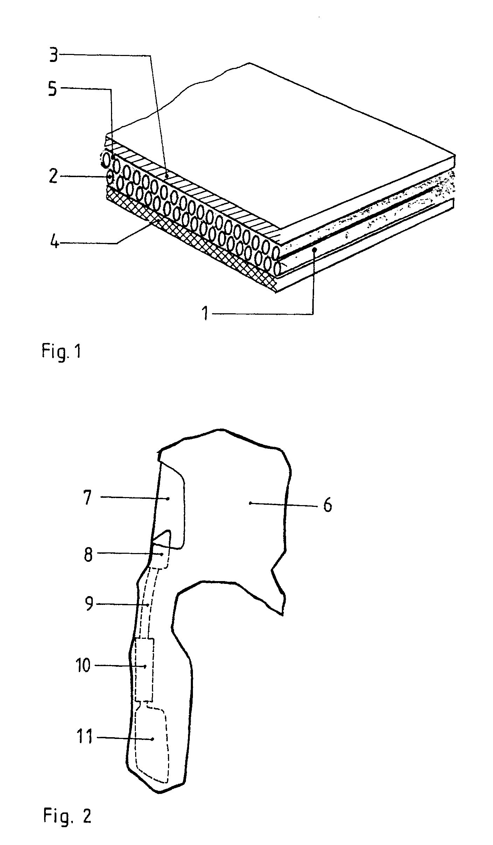

Das in Fig. 1 dargestellte Gewebesstück ist dreilagig ausgeführt, wobei die mittlere Lage ein Glasfasergewebe (1) ist, dessen einzelne Glasfasern (2) in ihrer Stirnfläche dargestellt sind. Das Glasfasergewebe (1) ist mit Silan als Haftvermittler imprägniert und bildet auf diese Weise eine Zwischenschicht (5), auf welche eine Silikonschicht (4) und eine PVC-Schicht (3) aufgetragen sind. Beidseitig des Glasfasergewebes kann auch ein aufgetragener Belag (5) als Haftvermittler dienen, auf den dann die PVC-Schicht (3) bzw. die Silikonschicht (4) gebracht ist.

Eine weitere günstige Möglichkeit für die Verwirklichung einer Zwischenschicht besteht darin, daß auf das Glasfasergewebe ein Belag aus Silan aufgetragen ist, der einseitig oder auch beidseitig des Gewebes als Haftvermittler für die anschließend aufzubringende PVC- und Silikonschicht dient.

Für die Imprägnierung wie für die Beläge kommen flüssige oder lösliche, kristalline Silane in Frage.

Die bei der späteren Verarbeitung des Verbundwerkstoffes nach außen zur Umgebung hin weisende Fläche ist mit der PVC-Schicht (3) versehen. Die der Schicht (3) gegenüberliegende Fläche der Zwischenschicht (1) ist mit der Silikon-Schicht (4) abgedeckt.

In Fig. 2 ist eine Hülle (6) dargestellt, die sowohl den Kopfbereich als auch den Schulter- und Rücken- bzw. Brustbereich einer nicht dargestellten Person überdeckt. Im Kopfbereich der Hülle (6) ist ein Sichtschirm (7) vorgesehen, unterhalb dessen eine Halbmaske (8) mit einem Anschlußschlauch (9) an ein Atemschutzgerät (10) angeschlossen ist. Das Atemschutzgerät besitzt eine nicht dargestellte Chemikalpatrone mit einem den Wasserdampf und das $CO_2$ des Ausatemgases aufnehmenden sowie sauerstoffabgebenden Chemikal.

**Patentansprüche**

1.   Atemschutzgerät mit einer Schutzhülle, insbesondere einer Rauchschutzhaube, dessen Atemanschluß mit einem den Wasserdampf und das $CO_2$ aufnehmenden sowie sauerstoffabgebenden Chemikal oder mit einem Filter verbunden ist und dessen Hüllen- bzw. Haubenmaterial aus einem beschichteten Verbundwerkstoff mit einem Trägergewebe aus reißfesten, hitzebeständigen und wasserdampfabweisenden Fasern besteht, dadurch gekennzeichnet, daß der Verbundwerkstoff ein Trägergewebe (1) aus Glasfasern (2) besitzt, welches eine Zwischenschicht (5) aus Silan als Haftvermittler aufweist, auf welche einseitig zur Umgebung hin eine PVC-Beschichtung (3), und auf der der PVC-Beschichtung (3) abgewandten Fläche eine Silikon-Beschichtung (4) aufgetragen ist.

2. Atemschutzgerät nach Anspruch 1, dadurch gekennzeichnet, daß die Zwischenschicht (5) durch Imprägnierung des Glasfasergewebes (1) gewonnen ist.

3. Atemschutzgerät nach Anspruch 1, dadurch gekennzeichnet, daß die Zwischenschicht durch mindestens einseitige Auftragung eines Belages (5) aus Silan gewonnen ist.

3

5

2

4

1

Fig. 1

7

8

9

10

11

6

Fig. 2

# EUROPÄISCHER
# RECHERCHENBERICHT

Nummer der Anmeldung

## EP 90 11 6855

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P,Y | EP-A-0 374 776 (DRÄGERWERK) <br> * Figuren 1-3 * <br> — — — | 1,2,3 | A 62 B 17/00 <br> A 62 B 17/04 |
| Y | EP-A-0 201 204 (UNITED MERCHANTS AND MANUFAC- TURERS) <br> * Zusammenfassung * * Spalte 8, Zeilen 41 - 46 * <br> — — — | 2,3 | |
| A | FR-A-2 626 182 (NOVATOME) <br> * Seite 1, Zeilen 1 - 4 * * Seite 7, Zeilen 4 - 30 @ Seite 11, Zeile 33 - Seite 12, Zeile 13; Figuren * <br> — — — | 1 | |
| A | DE-C-6 475 60 (GIRAUDET) <br> * Seite 1, Zeilen 1 - 7 * * Zeilen 35 - 38; Figuren * <br> — — — | 1 | |
| A | US-A-4 495 238 (PALL) <br> * Spalte 2, Zeilen 27 - 60 * * Spalte 3, Zeilen 29 - 48 * * Spalte 6, Zeilen 47 - 53; Figuren * <br> — — — | 1 | |
| A | US-A-4 502 153 (LION) <br> * Spalte 1, Zeile 67 - Spalte 2, Zeile 27; Figuren * <br> — — — — — | 1 | |

| | RECHERCHIERTE SACHGEBIETE (Int. Cl.5) |
|---|---|
| | A 62 B <br> A 62 D |

Der vorliegende Recherchenbericht wurde für alle Patentansprüche erstellt

| Recherchenort | Abschlußdatum der Recherche | Prüfer |
|---|---|---|
| Den Haag | 20 Juni 91 | WALVOORT B.W. |